# FASCICULE DE BREVET EUROPEEN

(11) **EP 2 691 941 B1**
(45) Date de publication et mention de la délivrance du brevet: **15.10.2025**
(21) Numéro de dépôt: 12717386.2
(22) Date de dépôt: 27.03.2012
(51) Int. Cl.: G07C 9/00, G07F 17/12

(54) **PROCÉDÉ ET DISPOSITIF D'ACTIONNEMENT DE SERRURE**
VERFAHREN UND VORRICHTUNG ZUR BETÄTIGUNG EINES SCHLOSSES
METHOD AND DEVICE FOR ACTUATING A LOCK

(30) Priorité: 29.03.2011 FR 1152569
(43) Date de publication de la demande: 05.02.2014
(73) Titulaire: Orange, 92130 Issy-les-Moulineaux (FR)
(72) Inventeur: PONTANI, Ludovic, F-95250 Beauchamp (FR); LAMER, Bastien, F-92190 Meudon (FR)
(86) Numéro de dépôt international: PCT/FR2012/050630
(87) Numéro de publication internationale: WO 2012/143634

(56) Documents cités:
- WO-A1-99/15393
- DE-A1- 10 164 574
- JP-A- 2006 125 054
- JP-A- 2007 085 009
- JP-A- 2007 102 273
- JP-A- 2009 157 711

## Description

L'invention se rapporte au domaine de la sécurité. Plus précisément, l'invention concerne les systèmes de serrures.

Les serrures classiques, commandées par une clé mécanique, présentent certains inconvénients bien connus. Ainsi, une telle clé étant assez volumineuse, il est malcommode de la garder sur soi (dans une poche, ou attachée au poignet), comme on est souvent obligé de le faire. Par ailleurs, on constate, au bout d'une certaine durée d'utilisation, une usure mécanique de la clé et de la serrure causant des dysfonctionnements aux conséquences plus ou moins graves.

Pour résoudre ces problèmes, une solution connue consiste à utiliser une serrure (par exemple, une serrure de porte permettant à des utilisateurs autorisés d'accéder à une partie d'un bâtiment) actionnée par chaque utilisateur autorisé au moyen d'une saisie manuelle d'un identifiant personnel (par exemple, code PIN ou empreinte digitale) sur une interface associée à la serrure. Une entité de gestion (par exemple le fabricant de la serrure) programme la serrure de manière à ce qu'elle se déverrouille après authentification d'un tel identifiant. Ce système de serrures présente lui aussi des inconvénients bien connus : ainsi, si l'on utilise un code PIN, cela oblige l'utilisateur à le mémoriser (avec des risques d'oubli) ou à le stocker sur un support (avec le risque de perte ou de vol) ; par ailleurs, les procédés biométriques sont complexes et peu fiables.

Une autre solution connue à ces problèmes consiste à remplacer la clé mécanique par une « clé logique », à savoir un identifiant numérique secret contenu dans une carte à puce fournie à chaque utilisateur autorisé et pouvant communiquer avec contact, ou sans contact (par exemple, par Bluetooth ou NFC), avec la serrure. Une entité de gestion programme (ou fait programmer par un tiers de confiance) la serrure de manière à ce qu'elle se déverrouille après authentification de cette clé logique. On peut distinguer deux types de systèmes à clé logique :
- selon un premier type, la clé logique est un identifiant associé à une serrure particulière (par exemple, sur une porte de chambre d'hôtel ou une portière de voiture ou encore un portail de parking), ce qui permet au besoin à une pluralité d'utilisateurs d'actionner la même serrure ; l'entité de gestion (par exemple, le fabricant de la serrure ou une agence de location de voitures) enregistre la clé logique dans la carte à puce (par exemple, un badge, une télécommande ou un élément incorporé dans une clé de contact) ;
- selon un second type, la clé logique est un identifiant associé à une carte à puce particulière (carte d'abonnement), ce qui permet au besoin à son propriétaire de déverrouiller tout un parc de serrures (par exemple, attaches pour vélos à louer, ou portails de transports en commun) ; l'entité de gestion (par exemple, une municipalité ou un transporteur) enregistre, pour chaque nouvelle autorisation, la nouvelle clé logique dans la carte à puce.

Grâce à ces divers systèmes à clé logique, on peut efficacement, et commodément, ne permettre qu'à un ou plusieurs utilisateur(s) autorisé(s) de pouvoir actionner une certaine serrure, ou un certain parc de serrures. En revanche, ces systèmes sont inadaptés aux usages publics, c'est-à-dire en libre-service, qui permettent, notamment, à un utilisateur non répertorié d'emprisonner temporairement un certain objet (bagage ou vêtements dans un casier de gare ou de piscine, vélo sur un point d'attache, skis dans un rack à skis, et ainsi de suite) sans que cet utilisateur n'ait à fournir de chaîne antivol : en effet, les systèmes du premier type ne sont pas (contrairement aux systèmes à clé mécanique) équipés de moyens pour solidariser la carte à puce et la serrure lorsque cette dernière est déverrouillée ; quant aux systèmes du second type, ils requièrent, d'une part, que l'utilisateur contracte un abonnement auprès de l'entité de gestion avant de pouvoir utiliser la serrure, et d'autre part que l'entité de gestion provisionne la serrure pour chaque nouvel abonnement. C'est pourquoi on utilise encore, pour les usages publics, des clés mécaniques, avec les inconvénients précités.

La demande de brevet JP 2006-125054 divulgue un procédé de gestion de casier comprenant les étapes suivantes :
1) un utilisateur tient près d'une étiquette RFID un téléphone portable comprenant une fonction de lecteur d'étiquette RFID ; le téléphone portable lit et enregistre un numéro de casier, tandis que l'étiquette RFID enregistre un identifiant du téléphone portable ; puis l'étiquette RFID commande le verrouillage du casier ; et
2) l'utilisateur tient son téléphone portable près de l'étiquette RFID ; l'étiquette RFID reconnaît que l'utilisateur est légitime, sur la base de la lecture de l'identifiant du téléphone portable ; l'étiquette RFID lit le numéro de casier ; si ce numéro correspond à son propre numéro de casier, elle indique l'endroit où se trouve le casier, et commande le déverrouillage de ce casier.

Ce procédé permet de manière simple, fiable et peu coûteuse d'assurer la sécurité de casiers mis à la libre disposition du public. Avantageusement, les utilisateurs du procédé n'ont pas besoin de transporter une clé mécanique, ou de mémoriser un code secret, ou encore de mettre en œuvre une quelconque caractéristique physique de leur personne.

De plus, les utilisateurs peuvent piloter l'actionnement du casier simplement en se tenant près de l'étiquette RFID, donc sans intervention manuelle, ce qui peut s'avérer être particulièrement commode dans certaines circonstances, par exemple si l'utilisateur est aveugle, ou s'il porte des gants (par exemple, par grand froid).

Ce procédé présente toutefois un défaut de sécurité. En effet, il prévoit la transmission à l'étiquette RFID d'une donnée sensible, à savoir l'identifiant du téléphone portable (ou de la carte SIM qu'il contient) ; or cette donnée pourrait être interceptée par un tiers malveillant lors des échanges prévus par le procédé, ou bien extraite frauduleusement de l'étiquette RFID lorsque, le casier étant verrouillé, l'utilisateur du casier s'en est éloigné.

Le document WO 99/15393 décrit un système de sécurité pour sécuriser un article comprenant une ouverture pour recevoir une carte électronique réinscriptible.

La présente invention concerne donc un procédé d'actionnement de serrure, mis en œuvre dans un système comprenant au moins une carte à puce et un dispositif d'actionnement associé à la serrure, comme décrit par la revendication 1 de la présente demande.

Grâce à l'invention, les opérations de verrouillage et déverrouillage d'une serrure ne requièrent l'échange d'aucune donnée privée associée à l'utilisateur ou à la carte à puce en sa possession.

On notera que l'utilisation, selon l'invention, d'un nombre pseudo-aléatoire dans les communications entre un utilisateur et le dispositif d'actionnement de serrure est profondément différent de l'utilisation qui en est faite dans le domaine de la cryptographie, notamment aux fins d'authentification d'un utilisateur : en effet, les nombres pseudo-aléatoires sont utilisés en cryptographie pour masquer un secret détenu par l'utilisateur, et la procédure d'authentification consiste pour cet utilisateur à prouver qu'il connaît ce secret (tout en le protégeant contre des tiers malveillants) ; en revanche, dans le cadre de la présente invention, l'utilisation de la serrure est publique, c'est-à-dire offerte à quiconque, donc sans aucun besoin d'authentifier l'utilisateur.

Selon l'invention, ladite clé logique contenue dans la première carte à puce est engendrée par cette carte à puce.

Grâce à ces dispositions, la mise en œuvre de l'invention offre un maximum de sécurité.

Selon des caractéristiques particulières, lesdites cartes à puce sont des cartes SIM.

Grâce à ces dispositions, l'utilisateur peut commodément piloter l'actionnement de la serrure au moyen de son téléphone portable.

Corrélativement, l'invention concerne un système comprenant au moins une carte à puce et un dispositif d'actionnement de serrure comme décrit par la revendication 3 de la présente demande.

Les avantages offerts par le système d'actionnement de serrure succinctement exposé ci-dessus sont essentiellement les mêmes que ceux offerts par le procédé corrélatif succinctement exposés ci-dessus. On notera que l'on pourra réaliser le dispositif d'actionnement de serrure dans le contexte d'un circuit électronique. Ce circuit électronique pourra, par exemple, être constitué par une puce à logique câblée.

D'autres aspects et avantages de l'invention apparaîtront à la lecture de la description détaillée ci-dessous de modes de réalisation particuliers, donnés à titre d'exemples non limitatifs. La description se réfère aux dessins qui l'accompagnent, dans lesquels :
- la figure 1 illustre un système de rack à skis dans lequel l'invention est incorporée,
- la figure 2 illustre un mode de réalisation pour l'objet portatif communicant de la figure 1,
- la figure 3 illustre un mode de réalisation pour la carte à puce de la figure 2,
- la figure 4 illustre un mode de réalisation pour le dispositif d'actionnement de serrure de la figure 1,
- la figure 5a illustre les étapes d'une phase de verrouillage de serrure selon un mode de réalisation de l'invention, et
- la figure 5b illustre les étapes d'une phase de déverrouillage de serrure selon un mode de réalisation de l'invention.

Selon un premier mode de réalisation, le système selon l'invention comprend :
- au moins un objet portatif communicant 10, 10', ..., dans lequel est logée une carte à puce 1 ;
- un dispositif 20 d'actionnement de serrure, comprenant un lecteur sans-contact (utilisant par exemple le protocole NFC ou le protocole Bluetooth) apte à communiquer avec la carte à puce 1 ; et
- une serrure 30 commandée par ledit dispositif d'actionnement 20.

Les parties mécaniques, ou électromécaniques, de la serrure 30 sont de facture classique. La serrure 30 peut être solidaire d'un élément fixe (mur) ou d'un élément mobile (autobus, tram).

L'objet portatif communicant 10 fonctionne ici en mode émulation de carte, c'est-à-dire que, une fois associé à un élément de sécurité, il émule le fonctionnement d'une carte à puce sans-contact ; dans le cas où l'objet portatif communicant 10 est un téléphone portable, c'est la carte SIM logée dans ce téléphone qui constitue ledit élément de sécurité.

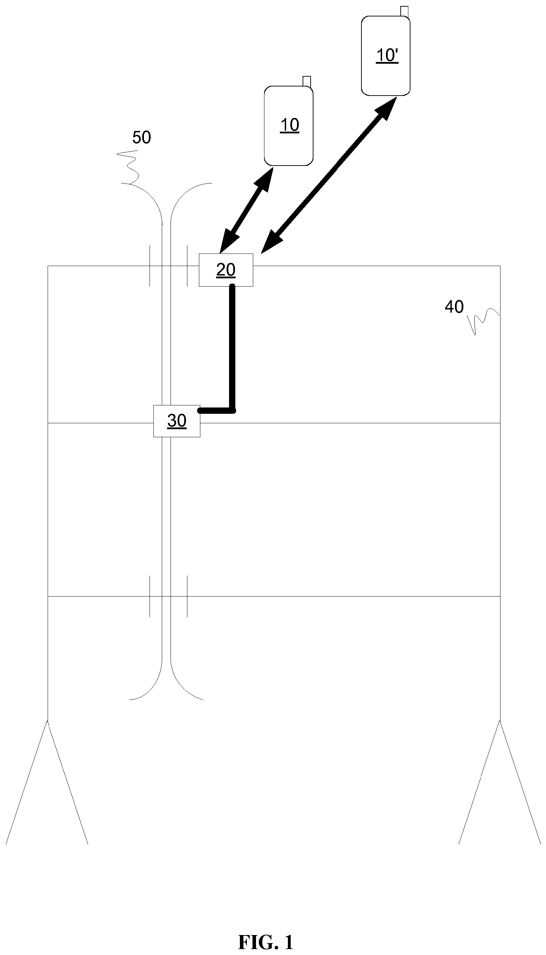

A titre d'exemple d'application de l'invention, on a représenté schématiquement sur la **figure 1** un rack à skis 40, qui emprisonne une paire de skis 50 au moyen de la serrure 30 et du dispositif d'actionnement 20.

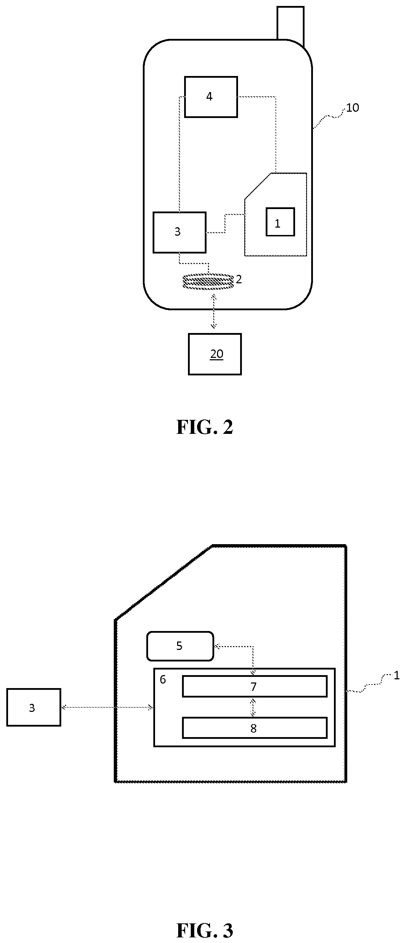

La **figure 2** illustre le cas où l'objet portatif communicant 10 est un téléphone portable. Ce téléphone portable comprend notamment :
- une carte à puce 1, par exemple une carte SIM ;
- une antenne 2 ;
- un contrôleur sans-contact 3, utilisant par exemple le protocole NFC ou le protocole Bluetooth ; et
- un système d'exploitation 4, chargé par exemple de gérer les communications téléphoniques (par exemple, de type GSM, GPRS ou UMTS) du téléphone mobile 10, en association avec la carte SIM 1.

Le contrôleur sans-contact 3 et l'antenne 2 sont chargés respectivement de s'interfacer et d'échanger des données avec un lecteur sans-contact 22 compris dans le dispositif 20 d'actionnement de serrure. L'échange des informations entre le contrôleur sans-contact 3 et la carte à puce 1 peut obéir, de manière classique, au protocole SWP (« *Single Wire Protocol* »)*.*

En référence à la **figure 3****,** la carte à puce 1 de la figure 2 comprend les éléments suivants :
- au moins une application 5 ;
- un environnement d'exécution 6 ;
- une interface de programmation 7 ; et
- une machine virtuelle 8.

La carte à puce 1 est une carte sur laquelle il est possible de déployer au moins une application (ou « applet ») 5. L'environnement d'exécution 6 est le système d'exploitation, qui gère les ressources de la carte et l'exécution des applets 5.

Ces applets 5 sont par exemple écrites dans un langage dérivé du langage JAVA classique. Dans ce cas, de manière classique, l'environnement d'exécution 6, appelé « Java Card Runtime Environment » (JCRE), est constitué principalement de la machine virtuelle « Java Virtual Machine » 8 et des interfaces de programmation « Javacard APIs » 7.

Selon un mode de réalisation, l'utilisation de l'invention requiert l'exécution d'une applet 5ₐ dédiée. Cette applet 5ₐ pourra alors, par exemple, être disponible par téléchargement (le cas échéant, payant), à partir d'un site Internet accessible par voie radio et géré par une entité de distribution dédiée.

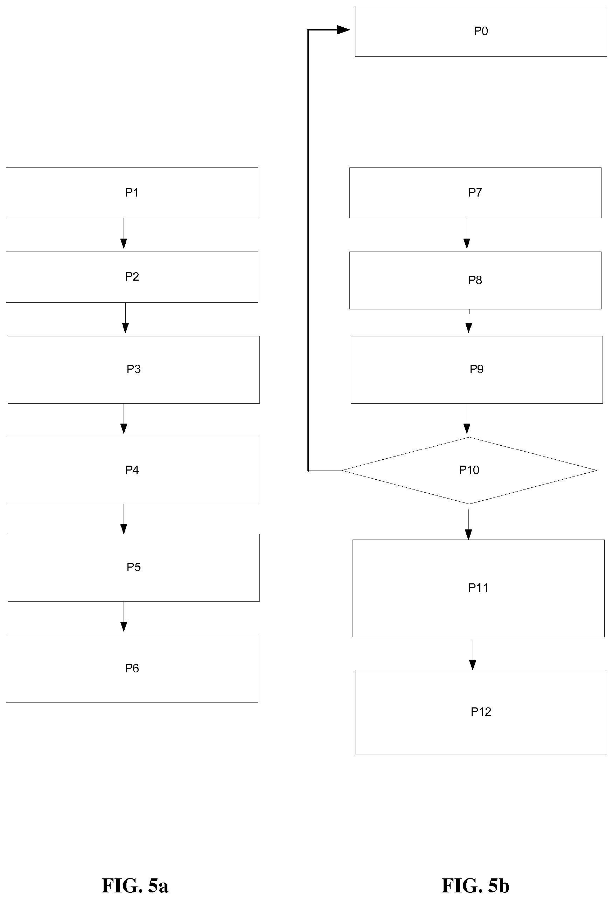

Selon un mode de réalisation de l'invention, l'objet portatif communicant 10 comprend un générateur de nombres pseudo-aléatoires, dont l'usage sera expliqué ci-dessous en référence à la figure 5. Ce générateur peut, de façon connue, être commodément contenu dans une applet 5_{b}.

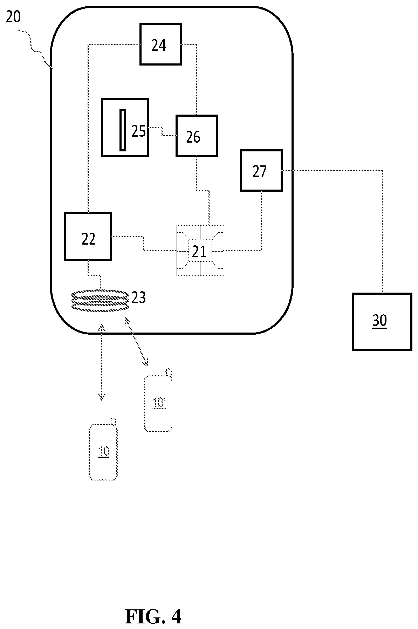

La **figure 4** illustre, dans le présent mode de réalisation, un dispositif 20 d'actionnement de serrure. Ce dispositif comprend :
- un circuit électronique de commande 21,
- le lecteur sans-contact 22, mentionné ci-dessus,
- une antenne 23,
- un dispositif d'alimentation en énergie 24, et
- un élément d'interface avec la serrure 27.

Le circuit électronique de commande 21 comprend des moyens tels que décrits succinctement ci-dessus, pour mettre en œuvre l'invention. En particulier, il comprend, ou a accès à, une mémoire (non représentée) apte à enregistrer une clé logique lors du verrouillage de la serrure.

Le dispositif 20 d'actionnement de serrure peut comprendre en outre des moyens pour fournir à l'utilisateur de la serrure toute information susceptible de l'intéresser telles que géolocalisation, risque d'avalanche, ou météo.

Le dispositif 20 d'actionnement de serrure peut comprendre également des moyens pour fournir à une entité centrale de gestion et/ou à l'utilisateur de la serrure, des informations telles que tentative d'effraction du système, ou dépassement d'une durée maximum prédéterminée d'utilisation de la serrure.

On notera que, dans le premier mode de réalisation décrit ci-dessus, l'objet portatif communicant 10 joue un rôle passif : ce mode de réalisation de l'invention peut donc avantageusement être mis en œuvre avec une carte à puce dépourvue d'alimentation en énergie autonome, ou avec un téléphone portable dont la batterie est déchargée.

Selon un deuxième mode de réalisation de l'invention, tous les éléments du système décrit ci-dessus sont analogues à ceux du premier mode de réalisation, à l'exception du lecteur sans-contact, qui est, ici, placé dans l'objet portatif communicant 10 au lieu d'être placé dans le dispositif 20 d'actionnement de serrure, et du contrôleur sans-contact, qui est, ici, placé dans le dispositif 20 d'actionnement de serrure au lieu d'être placé dans l'objet portatif communicant 10. Dans ce deuxième mode de réalisation, on peut donc avantageusement se dispenser du dispositif d'alimentation en énergie 24 précité.

De manière générale, le procédé selon l'invention comprend une étape de verrouillage et une étape de déverrouillage mettant en jeu une clé logique constituée par un nombre pseudo-aléatoire. Ce nombre pseudo-aléatoire peut être engendré par l'objet portatif communicant 10 (ou un dispositif associé).

Lors de l'étape de verrouillage, cette clé logique est mémorisée à la fois par la carte à puce 1 (ou un dispositif associé) et par le dispositif 20 d'actionnement de serrure.

L'étape ultérieure de déverrouillage de la serrure 30 peut, naturellement, être mise en œuvre par l'utilisateur ayant mis en œuvre le verrouillage de cette serrure, mais elle peut également, en variante, être mise en œuvre par un ayant-droit de cet utilisateur. En effet, l'utilisateur ayant mis en œuvre le verrouillage de la serrure peut communiquer la valeur de la clé logique utilisée à un autre utilisateur, par exemple au moyen d'un message radio (tel qu'un SMS crypté), ce second utilisateur pouvant alors faire déverrouiller cette serrure à la place du premier utilisateur; une information de géolocalisation pourra être associée au message afin que le second utilisateur puisse localiser aisément la serrure concernée ; cette variante peut être exploitée, par exemple, pour le prêt d'un vélo entre plusieurs personnes ; avantageusement, la transmission de la clé logique du premier utilisateur au second utilisateur n'implique la transmission d'aucune donnée privée du premier utilisateur, puisque, conformément à l'invention, la clé logique est un nombre pseudo-aléatoire, et non un identifiant permanent de la carte à puce (ou d'un téléphone portable contenant la carte à puce).

La **figure** 5a illustre les étapes d'une phase de verrouillage de serrure selon un mode de réalisation de l'invention.

Considérons l'application de l'invention dans laquelle un utilisateur souhaite déposer ses skis 50 dans un rack à skis 40 incorporant l'invention.

A l'étape P1 , l'utilisateur met ses skis 50 dans le rack à skis 40.

A l'étape P2, l'utilisateur approche son objet portatif communicant 10 à proximité du dispositif d'actionnement 20 associé à la serrure 30.

A l'étape P3, l'objet portatif 10 et le dispositif d'actionnement 20 entrent en communication sans-contact.

A l'étape P4, l'objet portatif 10 envoie au dispositif d'actionnement 20 une clé logique contenue dans la carte à puce 1.

A l'étape P5, la carte à puce 1 et le dispositif d'actionnement 20 enregistrent cette clé logique.

On notera qu'en variante, l'enregistrement de la clé logique par la carte à puce qui l'a engendré peut être effectué avant son envoi au dispositif d'actionnement.

A l'étape P6, le dispositif d'actionnement 20 commande le verrouillage de la serrure 30, ce qui emprisonne les skis 50 dans le rack à skis 40.

Selon un mode de réalisation, chaque verrouillage de la serrure requiert le paiement d'une somme prédéterminée (somme récupérable, optionnellement, lors du déverrouillage subséquent) ; dans ce cas, le dispositif 20 d'actionnement de serrure comporte de préférence un dispositif 25 permettant l'insertion de pièces de monnaie, ainsi qu'un mécanisme 26 pour refuser le verrouillage de la serrure en l'absence dudit paiement. En variante, ce dispositif 25 peut être intégré à la serrure 30 plutôt qu'au dispositif d'actionnement 20.

La **figure 5b** illustre les étapes d'une phase de déverrouillage de serrure selon un mode de réalisation de l'invention.

Supposons que, dans l'application considérée ci-dessus, l'utilisateur souhaite ultérieurement récupérer ses skis.

A l'étape P7, l'utilisateur approche son objet portatif 10' à proximité du dispositif d'actionnement 20.

A l'étape P8, l'objet portatif 10' et le dispositif d'actionnement 20 entrent en communication sans-contact.

A l'étape P9, l'objet portatif 10' fournit au dispositif d'actionnement 20 une clé logique associée à une carte à puce 1' contenue dans cet objet portatif 10'.

A l'étape P10, le dispositif d'actionnement 20 compare la clé logique fournie par l'objet portatif 10' à l'étape P9 avec la clé logique préalablement enregistrée par le dispositif d'actionnement 20 lors de son dernier verrouillage à l'étape P5.

Si la comparaison de l'étape P10 montre que ces deux clés logiques comparées sont différentes, alors, à l'étape P0, le dispositif d'actionnement 20 refuse de commander l'ouverture de la serrure 30, et, optionnellement, produit un signal d'erreur sonore ou lumineux caractéristique du refus.

Si en revanche la comparaison de l'étape P10 montre que ces deux clés logiques comparées sont identiques, alors, à l'étape P11, le dispositif d'actionnement 20 commande le déverrouillage de la serrure 30, ce qui libère les skis 50.

Enfin, à l'étape P12, le dispositif d'actionnement 20 efface la clé logique qui avait été enregistrée lors de son dernier verrouillage à l'étape P5.

## Revendications

1. Procédé d'actionnement de serrure, mis en œuvre dans un système comprenant au moins une carte à puce et un dispositif d'actionnement associé à ladite serrure, ladite au moins une carte à puce pouvant communiquer à distance avec ledit dispositif d'actionnement à l'aide de moyens de communication sans contact pour échanger des informations, un identifiant numérique, dit clé logique, pouvant être associé à ladite carte à puce, ledit procédé comprenant les étapes suivantes :
- lors de chaque verrouillage de la serrure (30),
- enregistrement par ledit dispositif d'actionnement (20) d'une clé logique déjà contenue dans une carte à puce dudit système, dite première carte à puce (1), en communication avec ledit dispositif d'actionnement (20), ladite clé logique étant un nombre pseudo-aléatoire engendré par ladite première carte à puce (1), puis
- verrouillage de la serrure (30), et
- lors de chaque déverrouillage de la serrure (30),
- comparaison, par ledit dispositif d'actionnement (20), entre la clé logique contenue dans une carte à puce dudit système, dite seconde carte à puce (1'), en communication avec ledit dispositif d'actionnement (20), et la clé logique contenue dans ladite première carte à puce et enregistrée lors du dernier verrouillage de la serrure (30), puis
- déverrouillage de la serrure (30) seulement si les clés logiques contenues dans la première (1) et la seconde carte (1') à puce sont identiques.

2. Procédé d'actionnement de serrure selon la revendication 1, **caractérisé en ce que** lesdites cartes à puce (1, 1') sont des cartes SIM.

3. Système comprenant :
- au moins une carte à puce ;
- un dispositif d'actionnement de serrure au moyen d'une dite carte à puce ;
ladite au moins une carte à puce pouvant communiquer à distance avec ledit dispositif d'actionnement, un identifiant numérique, dit clé logique, pouvant être associé à ladite carte à puce, ledit dispositif d'actionnement comprenant
- des moyens pour :
- lors de chaque verrouillage de la serrure (30),
- enregistrer une clé logique déjà contenue dans une carte à puce dudit système, dite première carte à puce (1), en communication avec ledit dispositif d'actionnement (20), ladite clé logique étant un nombre pseudo-aléatoire engendré par ladite première carte à puce (1), puis
- commander le verrouillage de la serrure (30), et
- lors de chaque déverrouillage de la serrure (30),
- comparer la clé logique contenue dans une carte à puce dudit système, dite seconde carte à puce (1'), en communication avec ledit dispositif d'actionnement (20), avec la clé logique contenue dans ladite première carte à puce et enregistrée lors du dernier verrouillage de la serrure (30), puis
- commander le déverrouillage de la serrure (30) si et seulement si les clés logiques contenues dans la première (1) et la seconde (1') carte à puce sont identiques ;
- des moyens de communication sans contact pour échanger des informations avec lesdites première et seconde cartes à puce.

## Patentansprüche

1. Verfahren zum Betätigen eines Schlosses, das in einem System angewendet wird, das mindestens eine Chipkarte und eine mit dem Schloss verbundene Betätigungsvorrichtung aufweist, wobei die mindestens eine Chipkarte mit Hilfe kontaktloser Kommunikationsmittel zur Übertragung von Informationen aus der Ferne mit der Betätigungsvorrichtung kommunizieren kann, wobei der Chipkarte eine digitale Kennung, ein sogenannter logischer Schlüssel, zugeordnet werden kann, wobei das Verfahren die folgenden Schritte aufweist:
- bei jedem Verriegeln des Schlosses (30),
- Speichern durch die Betätigungsvorrichtung (20) eines bereits auf einer Chipkarte des Systems, der sogenannten ersten Chipkarte (1), enthaltenen logischen Schlüssels in Kommunikation mit der Betätigungsvorrichtung (20), wobei der logische Schlüssel eine von der ersten Chipkarte (1) erzeugte Pseudozufallszahl ist, dann
- Verriegeln des Schlosses (30) und
- bei jedem Entriegeln des Schlosses (30),
- Vergleichen durch die Betätigungsvorrichtung (20) zwischen dem logischen Schlüssel, der auf einer Chipkarte des Systems, der sogenannten zweiten Chipkarte (1'), enthalten ist, in Kommunikation mit der Betätigungsvorrichtung (20), und dem logischen Schlüssel, der auf der ersten Chipkarte enthalten ist und beim letzten Verriegeln des Schlosses (30) gespeichert wurde, und anschließend
- Entriegeln des Schlosses (30) nur, wenn die in der ersten (1) und zweiten (1') Chipkarte enthaltenen logischen Schlüssel identisch sind.

2. Verfahren zum Betätigen eines Schlosses nach Anspruch 1, **dadurch gekennzeichnet, dass** die Chipkarten (1, 1') SIM-Karten sind.

3. System, das Folgendes aufweist:
- mindestens eine Chipkarte;
- eine Vorrichtung zum Betätigen eines Schlosses mittels einer solchen Chipkarte;
wobei die mindestens eine Chipkarte mit der Betätigungsvorrichtung aus der Ferne kommunizieren kann, wobei der Chipkarte eine digitale Kennung, ein sogenannter logischer Schlüssel, zugeordnet werden kann, wobei die Betätigungsvorrichtung
- Mittel für Folgendes aufweist:
- bei jedem Verriegeln des Schlosses (30),
- Speichern eines bereits auf einer Chipkarte des Systems, der sogenannten ersten Chipkarte (1), enthaltenen logischen Schlüssels in Kommunikation mit der Betätigungsvorrichtung (20), wobei der logische Schlüssel eine von der ersten Chipkarte (1) erzeugte Pseudozufallszahl ist, dann
- Steuern des Verriegelns des Schlosses (30) und
- bei jedem Entriegeln des Schlosses (30),
- Vergleichen des logischen Schlüssels, der auf einer Chipkarte des Systems, der sogenannten zweiten Chipkarte (1'), enthalten ist, in Kommunikation mit der Betätigungsvorrichtung (20), mit dem logischen Schlüssel, der auf der ersten Chipkarte enthalten ist und beim letzten Verriegeln des Schlosses (30) gespeichert wurde, dann
- Steuern des Entriegelns des Schlosses (30) nur dann, wenn die in der ersten (1) und zweiten (1') Chipkarte enthaltenen logischen Schlüssel identisch sind;
- kontaktlose Kommunikationsmittel zum Austausch von Informationen mit der ersten und zweiten Chipkarte.

## Claims

1. Method for actuating a lock, implemented in a system comprising at least one smart card and an actuating device associated with said lock, said at least one smart card being able to communicate remotely with said actuating device using contactless communication means for exchanging information, a digital identifier, referred to as a logical key, being able to be associated with said smart card, said method comprising the following steps:
- each time the lock (30) is locked,
- said actuating device (20) storing a logical key already contained in a smart card of said system, referred to as the first smart card (1), in communication with said actuating device (20), said logical key being a pseudo-random number generated by said first smart card (1), then
- locking the lock (30), and
- each time the lock (30) is unlocked,
- said actuating device (20) comparing the logical key contained in a smart card of said system, referred to as the second smart card (1'), in communication with said actuating device (20), and the logical key contained in said first smart card and stored the last time the lock (30) was locked, then
- unlocking the lock (30) only if the logical keys contained in the first smart card (1) and the second smart card (1') are identical.

2. Method for actuating a lock according to Claim 1, **characterized in that** said smart cards (1, 1') are SIM cards.

3. System comprising:
- at least one smart card;
- a device for actuating a lock by means of a said smart card;
said at least one smart card being able to communicate remotely with said actuating device, a digital identifier, referred to as a logical key, being able to be associated with said smart card, said actuating device comprising
- means for:
- each time the lock (30) is locked,
- storing a logical key already contained in a smart card of said system, referred to as the first smart card (1), in communication with said actuating device (20), said logical key being a pseudo-random number generated by said first smart card (1), then
- controlling the lock (30) so as to be locked, and
- each time the lock (30) is unlocked,
- comparing the logical key contained in a smart card of said system, referred to as the second smart card (1'), in communication with said actuating device (20), and the logical key contained in said first smart card and stored the last time the lock (30) was locked, then
- controlling the lock (30) so as to be unlocked if and only if the logical keys contained in the first smart card (1) and the second smart card (1') are identical;
- contactless communication means for exchanging information with said first smart card and second smart card.
